(19)

Europäisches
Patentamt
European
Patent Office
Office européen
des brevets

(11)  **EP 4 312 005 A1**

(12)  **EUROPEAN PATENT APPLICATION**

(43) Date of publication:
**31.01.2024  Bulletin 2024/05**

(21) Application number: **22187745.9**

(22) Date of filing: **29.07.2022**

(51) International Patent Classification (IPC):
**G01J 3/02** $^{(2006.01)}$        **G01J 3/453** $^{(2006.01)}$
**G01J 3/36** $^{(2006.01)}$

(52) Cooperative Patent Classification (CPC):
**G01J 3/4531; G01J 3/0218; G01J 3/36**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Stichting VU**
  **1081 HV Amsterdam (NL)**
• **Stichting Nederlandse Wetenschappelijk**
  **Onderzoek**
  **Instituten**
  **3526 KV Utrecht (NL)**
• **Universiteit van Amsterdam**
  **1012 WX Amsterdam (NL)**
• **Rijksuniversiteit Groningen**
  **9700 AB Groningen (NL)**

• **ASML Netherlands B.V.**
  **5500 AH Veldhoven (NL)**

(72) Inventors:
• **DEN BOEF, Arie, Jeffrey**
  **55oo AH Veldhoven (NL)**
• **VAN SCHAIJK, Theodorus, Thomas, Marinus**
  **1081 HV Amsterdam (NL)**
• **SETIJA, Irwan, Dani**
  **5500 AH Veldhoven (NL)**
• **Cromwijk, Tamara, Christina**
  **1081 HV Amsterdam (NL)**
• **ADHIKARY, Manashee**
  **3526 KV Utrecht (NL)**
• **VAN KRAAIJ, Markus, Gerardus, Martinus, Maria**
  **5500 AH Veldhoven (NL)**

(74) Representative: **ASML Netherlands B.V.**
  **Corporate Intellectual Property**
  **P.O. Box 324**
  **5500 AH Veldhoven (NL)**

(54)  **METHOD AND APPARATUSES FOR FOURIER TRANSFORM SPECTROMETRY**

(57)      Disclosed is a Fourier-transform spectrometer comprising a beamsplitting arrangement operable to define a first radiation source and a second radiation source from a common radiation source, and at least one detector operable to detect interferogram data as a function of detection position in at least a first detection plane direction of a detection plane, the interferogram data resulting from interference of a first diverging beam emitted from said first radiation source and a second diverging beam emitted from said second radiation source. A processor is operable to:

perform a linearization correction to said interferogram data to obtain linearized interferogram data; and Fourier transform the linearized interferogram data to obtain spectral characteristic data relating to the common radiation source.

Fig. 9

**Description**

FIELD

The present invention relates to a lithographic apparatus and/or a metrology apparatus and to methods of spectroscopy in relation to such apparatuses.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda/NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometer illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from multiple gratings using light from soft x-ray and visible to near-IR wave range

In lithography tools (e.g., scanners) and/or various metrology tools (e.g., alignment sensors, leveling sensors, scatterometers, holographic microscopes) it is often necessary to measure a spectrum of source radiation used by the tool (i.e., perform spectroscopy on the radiation). This may be achieved, for example, by using a dispersive optical element like a grating and measuring the intensity of radiation that is diffracted from the grating. Such known spectroscopy arrangements need additional optical components which direct the radiation being measured towards the dispersion grating at a well-defined angle and collection optics to collect the diffracted light and project it onto a detector array. Achieving this with the required levels of accuracy over a large wavelength range puts relatively high demands on the spectrometer design, which tends to increase cost.

It would be desirable to improve on such spectroscopy methods.

SUMMARY

According to a first aspect of the invention, there is provided a Fourier-transform spectrometer comprising: a beamsplitting arrangement operable to define a first radiation source and a second radiation source from a common radiation source, at least one detector operable to detect interferogram data as a function of detection position in at least a first detection plane direction of a detection plane, the interferogram data resulting from interference of a first diverging beam emitted from said first radiation source and a second diverging beam emitted from said second radiation source; and a processor operable to: perform a linearization correction to said interferogram data to obtain linearized interferogram data; and Fourier transform the linearized interferogram data to obtain spectral characteristic data relating to the common radiation source.

According to a second aspect of the invention, there is provided a Fourier-transform spectrometer comprising: a beamsplitting arrangement operable to define a first radiation source and a second radiation source from a common radiation source, at least one detector operable to detect interferogram data describing an interferogram as a function of detection position in at least a first detection plane direction of a detection plane, the interferogram data resulting from interference of a first diverging beam emitted from said first radiation source and a second diverging beam emitted from said second radiation source;, wherein said Fourier-transform spectrometer comprises no intervening optics between the beamsplitting arrangement and the at least one detector such that said detector is arranged to directly detect said interferogram in an area of overlap of said first diverging beam and said second diverging beam.

According to a second aspect of the invention, there is provided a method comprising: splitting a common radiation source into a first radiation source and a second radiation source; emitting a first diverging beam from the first radiation source; emitting a second diverging beam from the second radiation source; detecting interferogram data as a function of detection position in at least a first detection plane direction of a detection plane, the interferogram data resulting from interference of the first diverging beam and the second diverging beam; performing a linearization correction to said interferogram data to obtain linearized interferogram data; and Fourier transforming the linearized interferogram data to obtain spectral characteristic data relating to the common radiation source.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 depicts a schematic overview of an alternative lithographic apparatus configure for EUV lithography;
- Figure 8 depicts schematically a dark field digital holographic microscope (df-DHM) operated in a parallel acquisition scheme, in accordance with an embodiment;
- Figure 9 depicts schematically a Fourier transform spectrometry arrangement according to an embodiment;
- Figure 10 is a flowchart describing a processing method for processing an interferogram obtained using the arrangement of Figure 9, according to an embodiment; and
- Figure 11(a) shows a plot of Fourier transformed, unlinearized detected signal level versus spatial frequency; Figure 11(b) illustrates a linearization method for a detected interferogram according to an embodiment; and Figure 11(c) shows a plot of Fourier transformed, linearized detected signal level versus spatial frequency; and
- Figure 12 depicts a block diagram of a computer system for controlling methods according to an embodiment.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

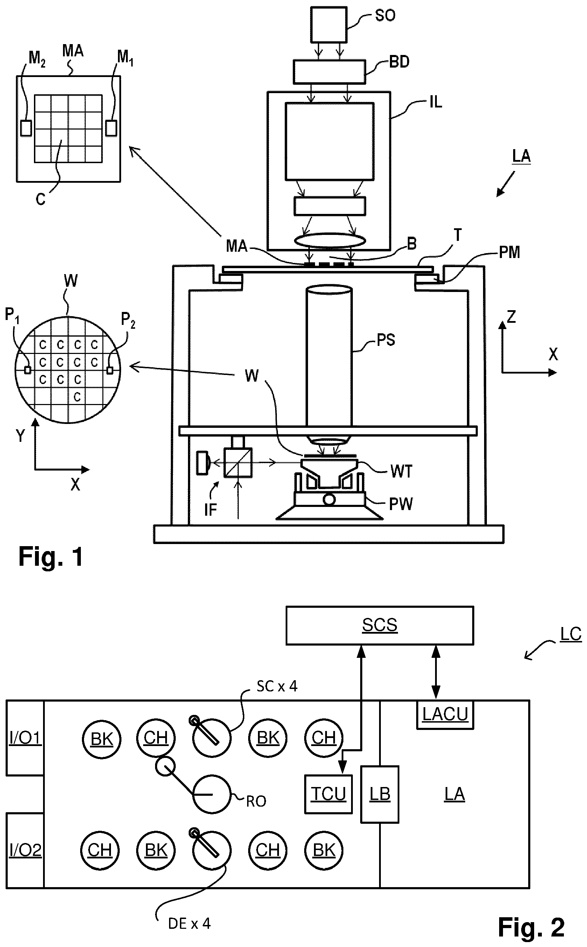

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semilatent image (image in a resist layer after a post-exposure bake step PEB), or on a developed resist image (in which the exposed or unexposed parts of the resist have been removed), or even on an etched image (after a pattern transfer step such as etching).

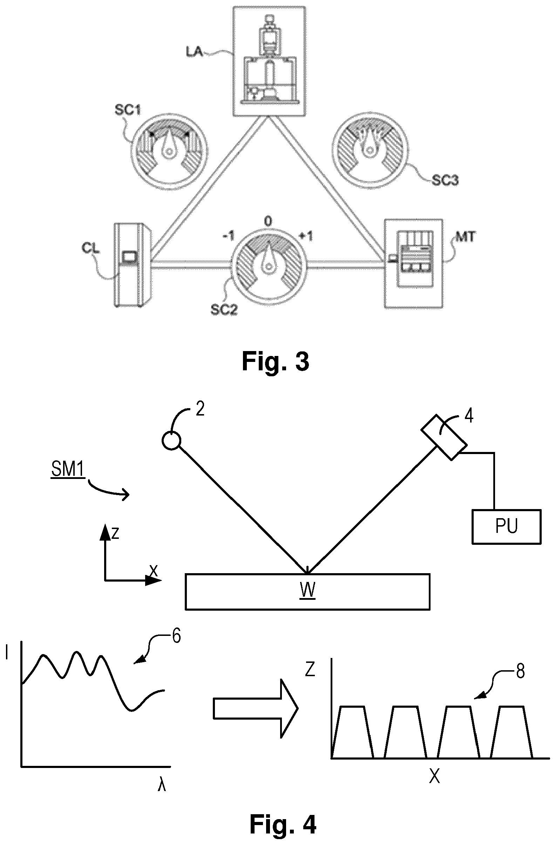

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

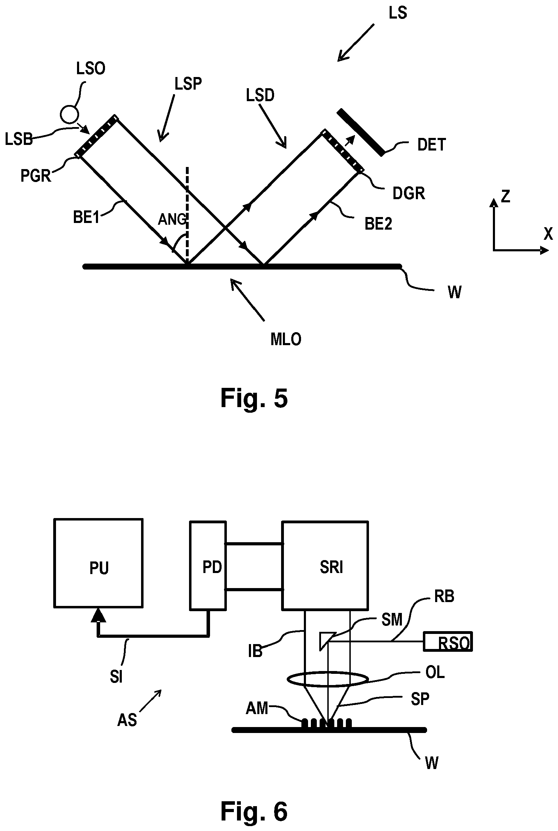

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

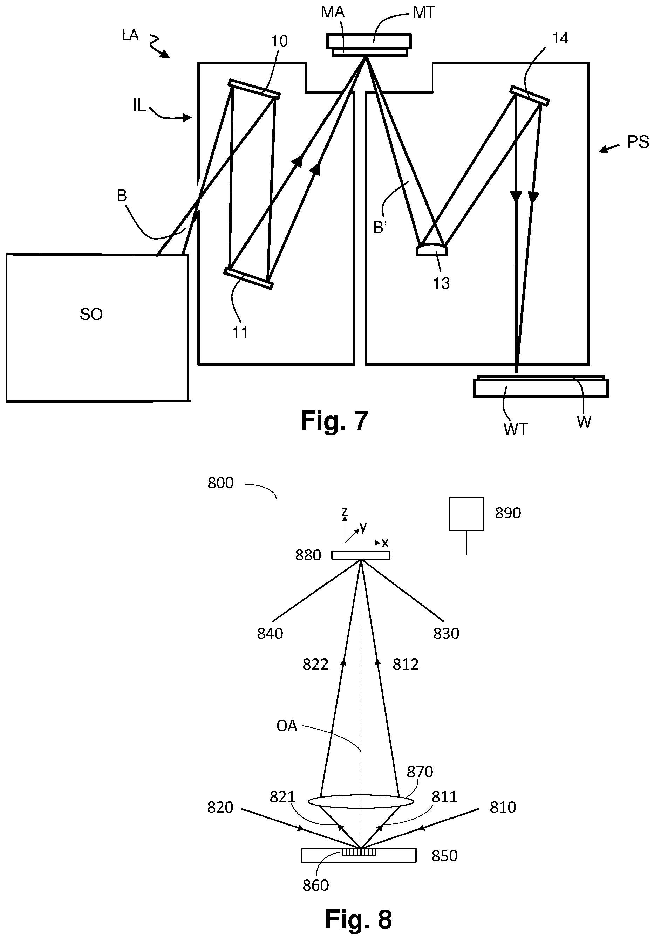

Figure 7 shows an alternative lithographic system to that of Figure 1, comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13,14 in Figure 1, the projection system PS may include a different number of mirrors (e.g. six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO may be a laser produced plasma (LPP) source, a discharge produced plasma (DPP) source, a free electron laser (FEL) or any other radiation source that is capable of generating EUV radiation.

Figure 8 schematically illustrates the imaging branch of a dark field digital holographic microscope (df-DHM) 800 in accordance with an embodiment. A dark field digital holographic microscope (df-DHM) comprises an imaging branch and an illumination branch. In this embodiment, a metrology target 860 comprising a structure on a substrate 850 is illuminated by two illumination beams of radiation, i.e., a first illumination beam of radiation 810 and a second illumination beam of radiation 820. In an embodiment, such two illumination beams 810, 820 may simultaneously illuminate the metrology target 860.

In an embodiment, the first illumination beam 810 may be incident on the metrology target 860 at a first angle of incidence in a first direction with respect to the optical axis OA. The second illumination beam 820 may be incident on the metrology target 860 at a second angle of incidence in a second direction with respect to the optical axis OA. The first angle of incidence of the first illumination beam 810 and the second angle of incidence of the second illumination beam 820 may be substantially the same. The angle of incidence of each illumination beam may be, for example in the range of 70 degrees to 90 degrees, in the range of 50 degrees to 90 degrees, in the range of 30 degrees to 90 degrees, in the range of 10 degrees to 90 degrees. The illumination of the metrology target 860 may result in radiation being scattered from the target. In an embodiment, the first illumination beam 810 may be incident on the metrology target 860 at a first azimuthal angle, corresponding to the first direction. The second illumination beam 820 may be incident on the metrology target 860 at a second azimuthal angle, corresponding to the second direction. The first azimuthal angle of the first illumination beam 810 and the second azimuthal angle of the second illumination beam 820 may be different; e.g., opposing angles 180 degrees apart.

Depending on the structure of the metrology target 860, the scattered radiation may comprise reflected radiation, diffracted radiation or transmitted radiation. In this embodiment, the metrology target may be a diffraction-based overlay target; and each illumination beam may correspond to a scattered beam comprising at least one non-zeroth diffraction order. Each scattered beam carries information of the illuminated metrology target. For example, the first illumination beam 810 may correspond to the first scattered beam 811 comprising the positive first diffraction order $+1^{st}$ DF; the second illumination beam 820 may correspond to the second scattered beam 821 comprising the negative first diffraction order $-1^{st}$ DF. The zeroth diffraction order and other undesired diffraction orders may either be blocked by a beam blocking element (not shown) or configured to completely fall outside the NA of the objective lens 870. As a result, the df-DHM may be operated in a dark field mode. Note that, in some embodiments, one or more optical elements, e.g., a lens combination, may be used to achieve same optical effect of the objective lens 870.

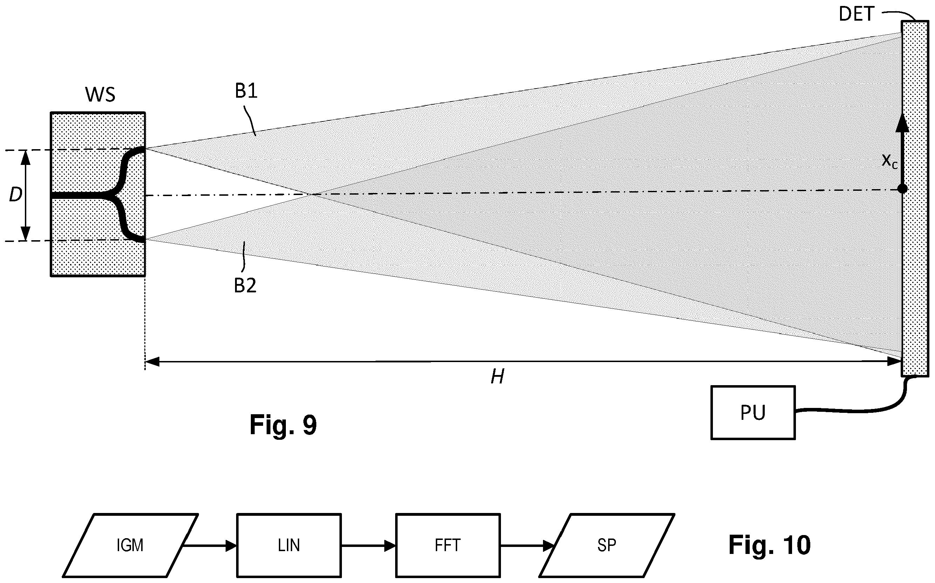

Both scattered beams 811, 821 may be collected by objective lens 870 and subsequently re-focused onto an image sensor 880. Objective lens 870 may comprise multiple lenses, and/or df-DHM 800 may comprise a lens system having two or more lenses, e.g., an objective lens and an imaging lens similar to the exemplary df-DHG of Figure 9, thereby defining a pupil plane of the objective lens between the two lenses and an image plane at the focus of the imaging lens. In this embodiment, a portion 812 of the first scattered beam 811 and a portion 822 of the second scattered beam 821 are simultaneously incident at a common position of the image sensor 880. At the same time, two reference beams of radiation, i.e. a first reference beam 830 and a second reference beam 840, are incident on the same position of the image sensor 880. Such four beams may be grouped into two pairs of scattered radiation and reference radiation. For example, the first scattered-reference beam pair may comprise the portion 812 of the first scattered beam 811 and the first reference beam 830. Likewise, the portion 822 of the second scattered-reference beam pair may comprise the second scattered beam 821 and the second reference beam 840. These two scattered-reference beam pairs may subsequently form two interference patterns (holographic images) which at least partially overlap in spatial domain.

In an embodiment, in order to separate the two at least partially, spatially overlapping interference patterns (e.g., in the spatial frequency domain), the first reference beam 830 may have a first angle of incidence with respect to the optical axis OA and the second reference beam 840 may have a second angle of incidence with respect to the optical axis OA; the first angle of incidence and the second angle of incidence being different. Alternatively or in addition, the first reference beam 830 may have a first azimuthal angle with respect to the optical axis OA and the second reference beam 840 may have a second azimuthal angle with respect to the optical axis OA; the first and second azimuthal angles being different.

In order to generate an interference pattern, the two beams of each scattered-reference beam pair should be at least partially coherent to each other, to a degree which is sufficient to form an interference pattern. Note that each scattered radiation beam may have a phase offset with respect to its corresponding illumination radiation. For example, at the image plane of the image sensor 880, such a phase offset may comprise contributions due to the optical path-length (OPD) from the metrology target 860 to the image sensor 880, and by the interaction with the metrology target. As described above, it is necessary to control the coherence between the first scattered-reference beam pair and the second scattered-reference beam pair such that each beam of one pair is incoherent to any beam of the other pair. In other words, interference should only occur between the beams within the same beam pair and suppressed between different beam pairs. In such a manner, only desired interference patterns, e.g., the two interference patterns formed by respect scattered-reference beam pairs, are formed in a superimposed manner on the image sensor 880, thus obviating the problem of separating or removing undesired interference patterns.

Metrology tools MT, such as a scatterometer, topography measurement system, position measurement system or DHM mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

Many of the optical metrology techniques, lithography techniques and associated metrology and lithography tools described above may use radiation for which it is necessary or desirable to measure spectral characteristics of radiation used in the tool, e.g., for measurement or exposure as appropriate. By way of a specific example, some of these tools may use spatially coherent quasi-monochromatic light; e.g., a particular example where this is so is in Digital Holographic Microscopy (DHM). The remainder of this disclosure will be described in terms of DHM, but it will be clear that the concepts disclosed herein may be used for determining spectral characteristics for any of the radiation sources or any radiation beam used in any of the tools and apparatuses described herein.

In DHM, the center wavelength is tunable and can be varied over a large range, e.g., from visible wavelengths to infra-red (IR) wavelengths. The bandwidth of the radiation may be of the order of several nanometers and may correspond to a temporal coherence length of some tens of micrometers. The finite bandwidth of the radiation used in a metrology sensor such as a DHM can have an adverse impact on the signal formation. In some cases this can be computationally corrected, but this requires an accurate knowledge of the center wavelength and the spectral shape of the quasi-monochromatic light that is used in the measurement.

Existing methods to measure spectral characteristic data such as the center wavelength and spectral shape comprise using a spectrometer with a dispersive element. For sufficient spectral resolution a grating is often used as the dispersive element. Spectrometers are able achieve sufficient accuracy levels for metrology purposes. However, in addition to using a grating, such spectrometers require additional optical components which direct the beam towards the dispersion grating at a well-defined angle and collection optics to collect the diffracted light and project it onto a detector array. Achieving this with the required levels of accuracy over a large wavelength range puts relatively high demands on the spectrometer design, which tends to result in high complexity and cost.

Another known method for measuring the required spectral characteristic data comprises Fourier-transform spectroscopy. In Fourier-transform spectroscopy, a Michelson interferometer is used to measure an interferogram as a function of an optical path difference (OPD) between two interfering beams. Fourier-transforming this interferogram yields the spectral shape of the light source. Fourier-transform spectroscopy is a proven technique for high-resolution spectroscopy. However, it requires a motorized and highly accurate translation of at least one mirror (or other optical element) to vary the OPD, which is difficult to realize.

Methods and apparatuses will be described which realize Fourier transform spectroscopy with high accuracy, and without using moving parts requiring highly accurate control. In particular, the Fourier transform spectroscopy methods described herein may also comprise no optics between the light source (other than to divide the light into two point sources as will be described) and a detector used to detect resultant interferogram data from which the desired spectral characteristic data can be inferred. Such optics may be used in prior art arrangements to linearize the relationship between OPD and position on the detector. However, such optics are themselves a source of error due to aberration and imperfections, and also increase cost and complexity of the overall arrangement.

The basic concept is essentially based on the Young's double-slit experiment. The radiation being measured, sourced from a common radiation source, is split into two point sources: a first radiation source from which a first diverging beam is emitted and a second radiation source from which a second diverging beam is emitted. The first and second diverging beams are substantially overlapped, with the overlapped beams directly illuminating a detector (e.g., which may comprise a pixel array). As such, light falls on each detector pixel (at least in the overlap area on the detector) having arrived from each of the two point sources, but for which the two beams will have followed a respective different optical path length.

While the optical path difference (OPD) between the beams for each pixel is different, the relationship between OPD and pixel position/detection position is not linear. As such, a processing step is proposed to perform a non-linearity correction so as to linearize the captured interferogram data. The interferogram data may comprise intensity values on the detector resulting from interference between two beams. The processed or linearized interferogram data may then be Fourier transformed to determine the desired spectral characteristics of the radiation being measured.

Figure 9 is a schematic illustration of an arrangement according to the concepts disclosed herein. The radiation to be measured may be coupled from a radiation source into the (e.g., single mode) waveguide splitter WS (or other suitable splitting arrangement) so as to define a first radiation source or point source and a second radiation source or point source from a common radiation source, the two sources separated by a distance D. The two radiation sources may both be spatially coherent. The radiation sources may both be in a plane parallel to a detection plane (e.g., the plane defined by detector DET), for example. Each radiation source may emit a respective first diverging beam B1 and second diverging beam B2.

The splitting ratio imposed by waveguide splitter WS is not critical but may be approximately 50:50.

Optionally, the waveguide splitter WS may be configured such that divergence of the first diverging beam B1 and the second diverging beam B2 is larger in a first detection plane direction with respect to a second detection plane direction, with the detector being a rectangular (i.e., oblong) or linear detector with its larger dimension extending substantially in the first detection plane direction.

As such, the divergence of each beam may be large in the first detection plane direction (e.g., the direction marked $x_c$ in the drawing) and small or minimized in the second detection plane direction (e.g., the direction normal to the plane of the drawing as depicted). The detector DET may comprise a large number (e.g., a high-resolution array) of pixels in the $x_c$ direction and only a very small number of pixels (e.g., one or more) in the direction normal to $x_c$ in the detection plane. For example, detector DET may be a linear detector (e.g., a 1D pixel array). The beams may be arranged to maximize the overlap area, or ensure a large overlap area, on the detector DET in at least the first detection plane direction.

The distance D between the two waveguides directly determines the OPD between the interfering beams on the detector array. In an embodiment, a sufficient spectral resolution may be obtained by an OPD of at least 400 μm, which may be obtained when D is on the order of millimeters (e.g., between 1mm and 10mm, between 2mm and 8mm, between 2mm and 6mm or between 3mm and 5mm; e.g., approximately 4mm).

The diverging (e.g., spherical) beams B1, B2 emanating from the waveguide apertures travel through free space over a distance *H*. This distance *H* may be in the order of a hundred millimeters, e.g., between 100mm and 400mm, between 100mm and 300mm, between 150mm and 300mm, or between 150mm and 250mm; e.g., about 200mm

The optical path difference *OPD* between the interfering beams on the image sensor array may be given by:

$$OPD \approx D\left[\left(\frac{x_c}{H}\right) - \frac{1}{2}\left(\frac{x_c}{H}\right)^3 + \frac{1}{8}\left(\frac{x_c}{H}\right)^5\right]$$

where $x_c$ describes the detection position in at least a first detection plane direction of a detection plane.

Near the center of the detector DET ($x_c \ll H$), the *OPD* increases approximately linearly with position $x_c$ on the detector. However, to obtain a sufficiently large *OPD,* measurements for larger values of $x_c$ are required, where the higher order non-linear terms in the equation above become relevant.

To address this, a processing step is proposed to perform a linearization correction or distortion correction so as to remove the non-linear terms. This may be achieved computationally (e.g., using a processor or processing unit PU), to determine a linear representation of the detected interferogram (linearized interferogram data) such that it represents a linear relationship between *OPD* and the detection position variable $x_c$ in the first detector direction. This linearization correction may be implemented according to the equation for *OPD* provided above, noting that the relevant parameters (distance *H* between sources and detector, detector location $x_c$ and point source separation *D*) are well defined and known accurately. Based on this, the linearization correction can be determined which effectively replaces the detection position variable $x_c$ with a transformed position which is a linearization of OPD. This correction can then be applied to the detected interferogram data to obtain corrected or linearized interferogram data.

Figure 10 is a flowchart describing the processing steps for processing the detected interferogram data IGM according to methods disclosed herein. A linearization step LIN or distortion correction step is performed on the detected interferogram data IGM to take out the non-linear terms and determine linearized interferogram data. This linearized interferogram data is then Fourier transformed (e.g., via a fast Fourier transform) FFT to the Fourier domain which directly yields the spectral characteristic data SP.

An example of the linearization step will now be described. The reason for linearization will be explained in the context of the following idealized example: For a monochromatic light beam with wavelength $\lambda_c$ the detected intensity on the detector array is given by:

$$I_d(x_c) = 1 + \cos\left(2\pi\frac{OPD(x_c)}{\lambda_c}\right)$$

Where the Optical Path Difference *OPD*($x_c$) depends on the position $x_c$ in the detector array (at least approximately) according to:

$$OPD(x_c) \approx D\left[\left(\frac{x_c}{H}\right) - \frac{1}{2}\left(\frac{x_c}{H}\right)^3 + \frac{1}{8}\left(\frac{x_c}{H}\right)^5\right]$$

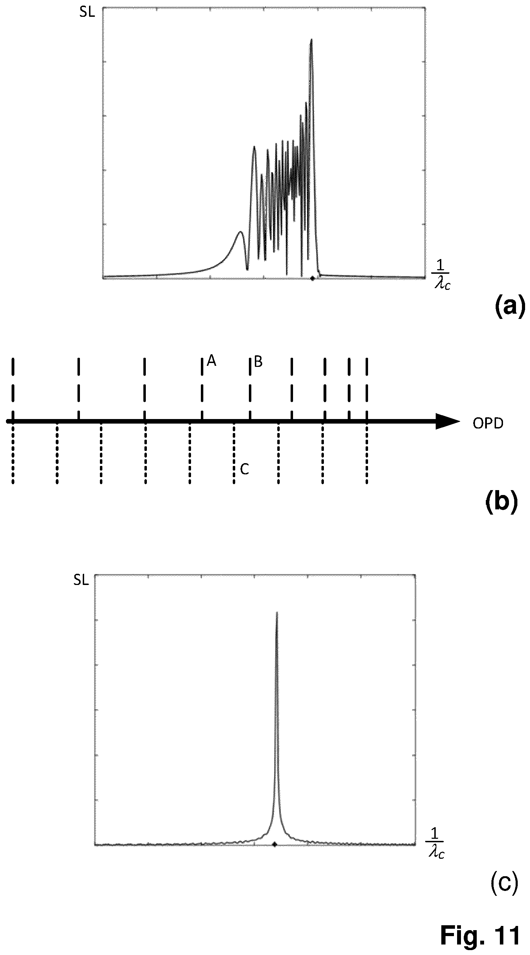

As a result of the 3rd and 5th order terms in this expression, the detected interference pattern will not be a pure sinusoidal shape. For larger OPD values, the sinusoidal intensity variation will be more expanded relative to the sinusoidal intensity variation that is detected near *OPD* = 0. As a result, the measured spectrum that is obtained after Fourier transforming the detected intensity $I_d(x_c)$ does not comprise a single spatial frequency $1/\lambda_c$ but is instead broadened as shown in Figure 11(a), which is a plot of the Fourier transformed signal level (arbitrary units) against $1/\lambda_c$ for the unlinearized interference pattern.

A purely exemplary linearization algorithm will now be explained in combination with Figure 11(b). The black horizontal arrow represents a linearly increasing OPD-scale. The non-equidistant dashed lines above the OPD-scale represent OPD values that correspond to the pixels at location $x_c$ in the detector array. The dotted lines below the OPD-scale represent equidistant samples of the OPD. The linearization step aims to find the intensity (or other measurement parameter) for these *OPD* positions. This can be accomplished by established interpolation techniques. For example, the intensity at OPD position "C" can be determined by a linear interpolation between the measured intensities at samples "A" and "B" according to:

$$I_C = wI_A + (1-w)I_B$$

Where the weight factor w is given by the relative OPD-distance between samples B and C:

$$w = \frac{OPD_B - OPD_C}{OPD_B - OPD_A}$$

This linear interpolation can be done for all intensity samples, resulting in a corrected interference pattern that, in case of monochromatic light, will vary perfectly sinusoidal according to:

$$I_d(OPD_C) = 1 + \cos\left(2\pi\frac{OPD_C}{\lambda_c}\right)$$

Figure 11(c) is an equivalent plot to that of Figure 11(a), but for the Fourier-transformed interpolated signal. The result is a spectral line which is no longer broadened due to non-linear sampling of the OPD.

The reconstruction step may further comprise optimizing the sampling grid (i.e., resolution and/or number of samples) to further sharpen the peak of the Fourier-transformed interpolated signal. This may be combined with an iterative refinement to improve accuracy of reconstructed spectrum. Alternatively or in addition the reconstruction step may further comprise tuning the number of samples to a power of 2 (or other low prime factorization). This improves the computational speed of the FFT.

It should be understood that other, e.g. more sophisticated, interpolation methods are also possible such as quadratic or spline interpolation. The linear interpolation which is described here has been chosen because of its simplicity and its effectiveness.

As such, the concepts disclosed herein provide a simple and low-cost method which can inherently achieve high accuracy due to the lack of intervening optics (e.g., lenses) between the point sources and detector, and because the relevant dimensions, in particular detection position $x_c$, and point source separation D, are both accurately known. This may be particular the case where the waveguides of the waveguide splitter and the image sensor are lithographically defined. The distance H between the waveguide and detector array can also be determined with very good accuracy.

While the embodiment described my not be very light efficient, this is not expected to present a problem as application speed is not critical for the intended application, and it is possible to perform averaging over many frames to improve signal-to-noise ratio.

While the embodiments described above use waveguides to perform the beamsplitting (e.g., a waveguide beamsplitter), the beamsplitting may be realized in any suitable method using any suitable beamsplitting arrangement (e.g., prism based) which creates two (e.g., spherical) beams.

To maximize the detected spectral range, the detector may actually comprise two or more detectors, each for a respective different wavelength range. For example, two linear image sensor arrays may be provided which either overlap (one on top of the other) or are directly adjacent each other: one for a first wavelength range (e.g., visible range) and the other for a second wavelength range (e.g., IR range).

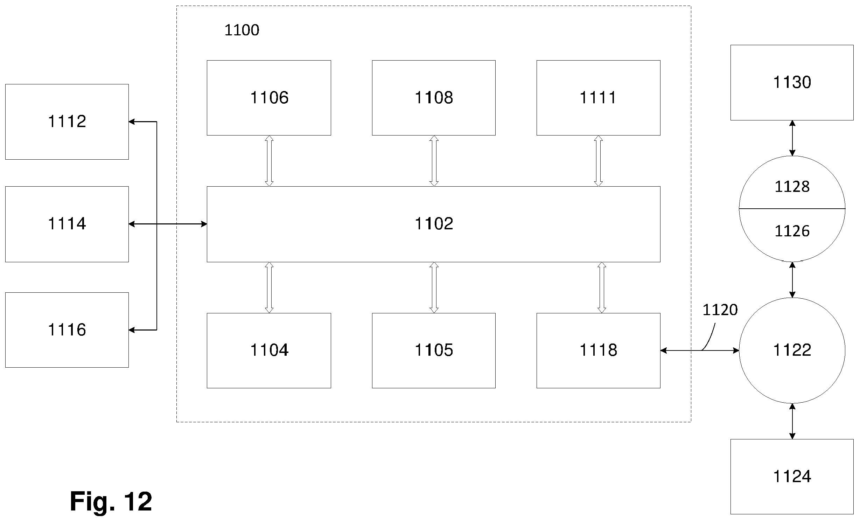

Figure 12 is a block diagram that illustrates a computer system 1100 that may assist in implementing the methods and flows disclosed and/or claimed herein. Computer system 1100 includes a bus 1102 or other communication mechanism for communicating information, and a processor 1104 (or multiple processors 1104 and 1105) coupled with bus 1102 for processing information. Computer system 1100 also includes a main memory 1106, such as a random access memory (RAM) or other dynamic storage device, coupled to bus 1102 for storing information and instructions to be executed by processor 1104. Main memory 1106 also may be used for storing temporary variables or other intermediate information during execution of instructions to be executed by processor 1104. Computer system 1100 further includes a read only memory (ROM) 1108 or other static storage device coupled to bus 1102 for storing static information and instructions for processor 1104. A storage device 1110, such as a magnetic disk or optical disk, is provided and coupled to bus 1102 for storing information and instructions.

Computer system 1100 may be coupled via bus 1102 to a display 1112, such as a cathode ray tube (CRT) or flat panel or touch panel display for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1100 in response to processor 1104 executing one or more sequences of one or more instructions contained in main memory 1106. Such instructions may be read into main memory 1106 from another computer-readable medium, such as storage device 1110. Execution of the sequences of instructions contained in main memory 1106 causes processor 1104 to perform the process steps described herein. One or more processors in a multi-processing arrangement may also be employed to execute the sequences of instructions contained in main memory 1106. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1104 for execution. Such a medium may take many forms, including but not limited to, non-volatile media, volatile media, and transmission media. Non-volatile media include, for example, optical or magnetic disks, such as storage device 1110. Volatile media include dynamic memory, such as main memory 1106. Transmission media include coaxial cables, copper wire and fiber optics, including the wires that comprise bus 1102. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1104 for execution. For example, the instructions may initially be borne on a magnetic disk of a remote computer. The remote computer can load the instructions into its dynamic memory and send the instructions over a telephone line using a modem. A modem local to computer system 1100 can receive the data on the telephone line and use an infrared transmitter to convert the data to an infrared signal. An infrared detector coupled to bus 1102 can receive the data carried in the infrared signal and place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also preferably includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card or a modem to provide a data communication connection to a corresponding type of telephone line. As another example, communication interface 1118 may be a local area network (LAN) card to provide a data communication connection to a compatible LAN. Wireless links may also be implemented. In any such implementation, communication interface 1118 sends and receives electrical, electromagnetic or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1126. ISP 1126 in turn provides data communication services through the worldwide packet data communication network, now commonly referred to as the "Internet" 1128. Local network 1122 and Internet 1128 both use electrical, electromagnetic or optical signals that carry digital data streams. The signals through the various networks and the signals on network link 1120 and through communication interface 1118, which carry the digital data to and from computer system 1100, are exemplary forms of carrier waves transporting the information.

Further embodiments are disclosed in the subsequent list of numbered claus:

1. A Fourier-transform spectrometer comprising:

a beamsplitting arrangement operable to define a first radiation source and a second radiation source from a common radiation source, at least one detector operable to detect interferogram data as a function of detection position in at least a first detection plane direction of a detection plane, the interferogram data resulting from interference of a first diverging beam emitted from said first radiation source and a second diverging beam emitted from said second radiation source; and a processor operable to: perform a linearization correction to said interferogram data to obtain linearized interferogram data; and Fourier transform the linearized interferogram data to obtain spectral characteristic data relating to the common radiation source.

2. A Fourier-transform spectrometer as defined in clause 1, comprising no intervening optics between the beamsplitting arrangement and the at least one detector such that said detector is arranged to directly detect said first diverging beam and said second diverging beam.

3. A Fourier-transform spectrometer as defined in clause 1 or 2, wherein said processor is operable to perform the linearization correction by transforming the interferogram data to said linearized interferogram data such that said linearized interferogram data has a linearized relationship with an optical path difference between the first diverging beam and second diverging beam.

4. A Fourier-transform spectrometer as defined in any preceding clause, wherein said beamsplitting arrangement is configured such that divergence of the first diverging beam and the second diverging beam is larger in the first detection plane direction with respect to a second detection plane direction of the detection plane.

5. A Fourier-transform spectrometer as defined in clause 4, wherein said beamsplitting arrangement is configured such that divergence of the first diverging beam and the second diverging beam is minimized in the second detection plane direction.

6. A Fourier-transform spectrometer as defined in clause 4 or 5, wherein said at least one detector comprises a rectangular or linear detector having a larger dimension extending substantially in the first detection plane direction.

7. A Fourier-transform spectrometer as defined in any preceding clause, wherein said at least one detector comprises two or more detectors, each said detector for a respective different wavelength range.

8. A Fourier-transform spectrometer as defined in any preceding clause, wherein a distance between the first radiation source and the second radiation source in a plane parallel to the detection plane is between 1mm and 10mm.

9. A Fourier-transform spectrometer as defined in any preceding clause, wherein a distance between the first radiation source and the second radiation source in a direction parallel to the detection plane is between 2mm and 6mm.

10. A Fourier-transform spectrometer as defined in any preceding clause, wherein a distance between the beamsplitting arrangement and the at least one detector in a direction normal to the detection plane is between 100mm and 400mm.

11. A Fourier-transform spectrometer as defined in any preceding clause, wherein the beamsplitting arrangement comprises a waveguide beamsplitter.

12. A Fourier-transform spectrometer as defined in any preceding clause, wherein the spectral characteristic data comprises a central wavelength value and spectral shape of the radiation emitted by said common radiation source.

13. A Fourier-transform spectrometer as defined any preceding clause, wherein said processor is operable to perform the linearization correction by interpolation of the interferogram data as detected.

14. A Fourier-transform spectrometer comprising:

a beamsplitting arrangement operable to define a first radiation source and a second radiation source from a common radiation source,

at least one detector operable to detect interferogram data describing an interferogram as a function of detection position in at least a first detection plane direction of a detection plane, the interferogram data resulting from interference of a first diverging beam emitted from said first radiation source and a second diverging beam emitted from said second radiation source;

wherein said Fourier-transform spectrometer comprises no intervening optics between the beamsplitting arrangement and the at least one detector such that said detector is arranged to directly detect said interferogram in an area of overlap of said first diverging beam and said second diverging beam.

15. A Fourier-transform spectrometer as defined in clause 14, comprising a processor operable to: perform a linearization correction to said interferogram data to obtain linearized interferogram data; and Fourier transform the linearized interferogram data to obtain spectral characteristic data relating to the common radiation source.

16. A Fourier-transform spectrometer as defined in clause 15, wherein said processor is operable to perform the linearization correction by transforming the interferogram data to said linearized interferogram data such that said linearized interferogram data has a linearized relationship with an optical path difference between the first diverging beam and second diverging beam.

17. A Fourier-transform spectrometer as defined in clause 15 or 16, wherein said processor is operable to perform the linearization correction by interpolation of the interferogram data as detected.

18. A Fourier-transform spectrometer as defined in any of clauses 14 to 17, wherein said beamsplitting arrangement is configured such that divergence of the first diverging beam and the second diverging beam is larger in the first detection plane direction with respect to a second detection plane direction of the detection plane.

19. A Fourier-transform spectrometer as defined in clause 18, wherein said beamsplitting arrangement is configured such that divergence of the first diverging beam and the second diverging beam is minimized in the second detection plane direction.

20. A Fourier-transform spectrometer as defined in clause 18 or 19, wherein said at least one detector comprises a rectangular or linear detector having a larger dimension extending substantially in the first detection plane direction.

21. A Fourier-transform spectrometer as defined in any of clauses 14 to 20, wherein said at least one detector comprises two or more detectors, each said detector for a respective different wavelength range.

22. A Fourier-transform spectrometer as defined in any of clauses 14 to 21, wherein a distance between the first radiation source and the second radiation source in a plane parallel to the detection plane is between 1mm and 10mm.

23. A Fourier-transform spectrometer as defined in any of clauses 14 to 22, wherein a distance between the first radiation source and the second radiation source in a direction parallel to the detection plane is between 2mm and 6mm.

24. A Fourier-transform spectrometer as defined in any of clauses 14 to 23, wherein a distance between the beamsplitting arrangement and the at least one detector in a direction normal to the detection plane is between 100mm and 400mm.

25. A Fourier-transform spectrometer as defined in any of clauses 14 to 24, wherein the beamsplitting arrangement comprises a waveguide beamsplitter.

26. A Fourier-transform spectrometer as defined in any of clauses 14 to 25, wherein the spectral characteristic data comprises a central wavelength value and spectral shape of the radiation emitted by said common radiation source.

27. A metrology device comprising the Fourier-transform spectrometer of any preceding clause, being operable to measure spectral characteristic data of measurement radiation used by said metrology device in performing measurements.

28. A metrology device as defined in clause 27, comprising a digital holographic microscope.

29. A metrology device as defined in clause 27, comprising a scatterometer.

30. A metrology device as defined in clause 27, comprising an alignment sensor.

31. A metrology device as defined in clause 27, comprising a leveling sensor.

32. A lithographic apparatus comprising the metrology device of clause 30 or 31.

33. A lithographic apparatus comprising the Fourier-transform spectrometer of any preceding clause, being operable to measure spectral characteristic data of exposure radiation used by said lithographic apparatus in performing exposures.

34. A method comprising:

detecting interferogram data as a function of detection position in at least a first detection plane direction of a detection plane, the interferogram data resulting from interference of first diverging beam emitted from a first radiation source and a second diverging beam emitted from a second radiation source, said first radiation source and second radiation source having been sourced from a common radiation source; performing a linearization correction to said interferogram data to obtain linearized interferogram data; and

Fourier transforming the linearized interferogram data to obtain spectral characteristic data relating to the common radiation source.

35. A method as defined in clause 34, wherein said performing a linearization correction comprises transforming the interferogram data to said linearized interferogram data such that said linearized interferogram data has a linearized relationship with an optical path difference between the first diverging beam and second diverging beam.

36. A method as defined in clause 34 or 35, comprising performing the linearization correction by interpolation of the interferogram data as detected.

37. A method as defined in any of clauses 34 to 36, comprising the initial steps of:

splitting the common radiation source into the first radiation source and the second radiation source;
emitting the first diverging beam from the first radiation source;
emitting the second diverging beam from the second radiation source.

38. A method as defined in clause 37, comprising propagating the first diverging beam and the second diverging beam directly onto the detection plane through only free space.

39. A method as defined in any of clauses 34 to 38, comprising diverging the first diverging beam and the second diverging beam by a greater amount in the first detection plane direction with respect to a second detection plane direction of the detection plane.

40. A method as defined in clause 39, comprising minimizing divergence of the first diverging beam and the second diverging beam in the second detection plane direction.

41. A method as defined in any of clauses 34 to 40, wherein a distance between the first radiation source and the second radiation source in a plane parallel to the detection plane is between 1mm and 10mm.

42. A method as defined in any of clauses 34 to 40, wherein a distance between the first radiation source and the second radiation source in a direction parallel to the detection plane is between 2mm and 6mm.

43. A method as defined in any of clauses 34 to 42, wherein a distance between the beamsplitting arrangement and the at the detection plane in a direction normal to the detection plane is between 100mm and 410mm.

44. A method as defined in any of clauses 34 to 43, wherein the spectral characteristic data comprises a central wavelength value and spectral shape of the radiation emitted by said common radiation source.

45. A computer program comprising computer readable instructions operable to perform the method of clause 34, 35 or 36 when performed on a computer.

46. A non-transitory computer medium comprising the computer program of clause 45.

Computer system 1100 may send messages and receive data, including program code, through the network(s), network link 1120, and communication interface 1118. In the Internet example, a server 1130 might transmit a requested code for an application program through Internet 1128, ISP 1126, local network 1122 and communication interface 1118. One such downloaded application may provide for one or more of the techniques described herein, for example. The received code may be executed by processor 1104 as it is received, and/or stored in storage device 1110, or other non-volatile storage for later execution. In this manner, computer system 1100 may obtain application code in the form of a carrier wave.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A Fourier-transform spectrometer comprising:

a beamsplitting arrangement operable to define a first radiation source and a second radiation source from a common radiation source,
at least one detector operable to detect interferogram data as a function of detection position in at least a first detection plane direction of a detection plane, the interferogram data resulting from interference of a first diverging beam emitted from said first radiation source and a second diverging beam emitted from said second radiation source; and
a processor operable to:
perform a linearization correction to said interferogram data to obtain linearized interferogram data; and Fourier transform the linearized interferogram data to obtain spectral characteristic data relating to the common radiation source.

2. A Fourier-transform spectrometer as claimed in claim 1, comprising no intervening optics between the beamsplitting arrangement and the at least one detector such that said detector is arranged to directly detect said first diverging beam and said second diverging beam.

3. A Fourier-transform spectrometer as claimed in claim 1 or 2, wherein said processor is operable to perform the linearization correction by transforming the interferogram data to said linearized interferogram data such that said linearized interferogram data has a linearized relationship with an optical path difference between the first diverging beam and second diverging beam.

4. A Fourier-transform spectrometer as claimed in any preceding claim, wherein said beamsplitting arrangement is configured such that divergence of the first diverging beam and the second diverging beam is larger in the first detection plane direction with respect to a second detection plane direction of the detection plane.

5. A Fourier-transform spectrometer as claimed in claim 4, wherein said beamsplitting arrangement is configured such that divergence of the first diverging beam and the second diverging beam is minimized in the second detection plane direction.

6. A Fourier-transform spectrometer as claimed in claim 4 or 5, wherein said at least one detector comprises a rectangular or linear detector having a larger dimension extending substantially in the first detection plane direction.

7. A Fourier-transform spectrometer as claimed in any preceding claim, wherein said at least one detector comprises two or more detectors, each said detector for a respective different wavelength range.

8. A Fourier-transform spectrometer as claimed in any preceding claim, wherein a distance between the first radiation source and the second radiation source in a plane parallel to the detection plane is between 1mm and 10mm.

9. A Fourier-transform spectrometer as claimed in any preceding claim, wherein a distance between the first radiation source and the second radiation source in a direction parallel to the detection plane is between 2mm and 6mm.

10. A Fourier-transform spectrometer as claimed in any preceding claim, wherein a distance between the beamsplitting arrangement and the at least one detector in a direction normal to the detection plane is between 100mm and 400mm.

11. A Fourier-transform spectrometer as claimed in any preceding claim, wherein the beamsplitting arrangement comprises a waveguide beamsplitter.

12. A Fourier-transform spectrometer as claimed any preceding claim, wherein said processor is operable to perform the linearization correction by interpolation of the interferogram data as detected.

13. A metrology device comprising the Fourier-transform spectrometer of any preceding claim, being operable to measure spectral characteristic data of measurement radiation used by said metrology device in performing measurements.

14. A lithographic apparatus comprising the metrology device of claim 13.

15. A method comprising:

detecting interferogram data as a function of detection position in at least a first detection plane direction of a detection plane, the interferogram data resulting from interference of first diverging beam emitted from a first radiation source and a second diverging beam emitted from a second radiation source, said first radiation source and second radiation source having been sourced from a common radiation source; performing a linearization correction to said interferogram data to obtain linearized interferogram data; and Fourier transforming the linearized interferogram data to obtain spectral characteristic data relating to the common radiation source.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

EP 4 312 005 A1

(a)

(b)

(c)

Fig. 11

**Fig. 12**

| | Europäisches Patentamt European Patent Office Office européen des brevets | **EUROPEAN SEARCH REPORT** | Application Number EP 22 18 7745 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/150195 A1 (WATERFORD INST TECHNOLOGY [IE]; MURPHY DOMINIC [IE] ET AL.) 8 November 2012 (2012-11-08) * claim 1 * * figures 1, 2 * * page 5, line 17 - page 6, line 5 * * page 7, line 9 - line 19 * * page 11, line 19 - line 26 * * page 11, line 29 * ----- | 1-15 | INV. G01J3/02 G01J3/453 G01J3/36 |
| X | MICHAEL SCHARDT ET AL: "Static Fourier transform infrared spectrometer", OPTICS EXPRESS, vol. 24, no. 7, 4 April 2016 (2016-04-04), page 7767, XP055550059, US ISSN: 2161-2072, DOI: 10.1364/OE.24.007767 | 1,3,12, 15 | |
| Y | * figure 5 * * page 4 * & Leslie Greengard ET AL: "Accelerating the Nonuniform Fast Fourier Transform", SIAM Review, 1 January 2004 (2004-01-01), pages 443-454, XP055359813, DOI: 10.1137/S003614450343200X Retrieved from the Internet: URL:http://www.math.nyu.edu/faculty/greeng ar/glee_nufft_sirev.pdf [retrieved on 2017-03-29] * page 444 * ----- | 4-6 | TECHNICAL FIELDS SEARCHED (IPC) G01J |
| Y | US 2018/066990 A1 (SCHARDT MICHAEL [DE]) 8 March 2018 (2018-03-08) * paragraph [0091] * * figure 6 * ----- | 4-6 | |

-/--

The present search report has been drawn up for all claims

| Place of search | Date of completion of the search | Examiner |
|---|---|---|
| Munich | 13 January 2023 | Parise, Berengere |

Europäisches
Patentamt

European
Patent Office

Office européen
des brevets

# EUROPEAN SEARCH REPORT

Application Number

EP 22 18 7745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/102753 A1 (VAN DE KERKHOF MARCUS ADRIANUS [NL] ET AL) 5 May 2011 (2011-05-05) * the whole document * | 1-15 | |
| A,D | EP 1 628 164 A2 (ASML NETHERLANDS BV [NL]) 22 February 2006 (2006-02-22) * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 13 January 2023 | Parise, Berengere |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 22 18 7745

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2023

| Patent document cited in search report | | Publication date | Patent family member(s) | | Publication date |
|---|---|---|---|---|---|
| WO 2012150195 | A1 | 08-11-2012 | GB | 2490497 A | 07-11-2012 |
| | | | US | 2014347659 A1 | 27-11-2014 |
| | | | WO | 2012150195 A1 | 08-11-2012 |
| US 2018066990 | A1 | 08-03-2018 | CN | 107949776 A | 20-04-2018 |
| | | | DE | 102015208796 A1 | 17-11-2016 |
| | | | EP | 3295138 A1 | 21-03-2018 |
| | | | US | 2018066990 A1 | 08-03-2018 |
| | | | WO | 2016180551 A1 | 17-11-2016 |
| US 2011102753 | A1 | 05-05-2011 | IL | 243016 A | 29-12-2016 |
| | | | TW | 200951636 A | 16-12-2009 |
| | | | TW | 201443580 A | 16-11-2014 |
| | | | TW | 201443581 A | 16-11-2014 |
| | | | US | 2011102753 A1 | 05-05-2011 |
| | | | US | 2014327908 A1 | 06-11-2014 |
| | | | US | 2014333922 A1 | 13-11-2014 |
| | | | WO | 2009129974 A1 | 29-10-2009 |
| EP 1628164 | A2 | 22-02-2006 | CN | 1916603 A | 21-02-2007 |
| | | | EP | 1628164 A2 | 22-02-2006 |
| | | | EP | 2239632 A1 | 13-10-2010 |
| | | | JP | 4357464 B2 | 04-11-2009 |
| | | | JP | 4898869 B2 | 21-03-2012 |
| | | | JP | 2006060214 A | 02-03-2006 |
| | | | JP | 2009204621 A | 10-09-2009 |
| | | | KR | 20060050488 A | 19-05-2006 |
| | | | SG | 120263 A1 | 28-03-2006 |
| | | | SG | 139763 A1 | 29-02-2008 |
| | | | SG | 173420 A1 | 29-08-2011 |
| | | | SG | 10201500569R A | 30-03-2015 |
| | | | TW | I294518 B | 11-03-2008 |
| | | | US | 2006033921 A1 | 16-02-2006 |
| | | | US | 2006066855 A1 | 30-03-2006 |
| | | | US | 2011007314 A1 | 13-01-2011 |
| | | | US | 2012038929 A1 | 16-02-2012 |
| | | | US | 2014055788 A1 | 27-02-2014 |
| | | | US | 2014233025 A1 | 21-08-2014 |
| | | | US | 2019170657 A1 | 06-06-2019 |
| | | | US | 2021208083 A1 | 08-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100328655 A
- US 2011102753 A1
- US 20120044470 A
- US 20110249244 A
- US 20110026032 A
- EP 1628164 A
- US 6952253 B
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1